# EUROPÄISCHE PATENTANMELDUNG

(11) **EP 0 977 101 A1**
(43) Veröffentlichungstag der Anmeldung: **02.02.2000**
(21) Anmeldenummer: 99114812.3
(22) Anmeldetag: 29.07.1999
(51) Int. Cl.: G05B 19/418

(54) **Flexibles Fertigungssystem und Steuerungsverfahren**

(30) Priorität: 30.07.1998 DE 29813589 U
(71) Anmelder: KUKA Schweissanlagen GmbH, 86165 Augsburg (DE)
(72) Erfinder: Lein, Gerhard, 86356 Neusäss-Ottmarshausen (DE); Rippl, Peter, Dr., 86163 Augsburg (DE)
(74) Vertreter: Ernicke, Klaus Stefan

(57) **Zusammenfassung**

Die Erfindung betrifft ein Steuerverfahren und ein flexibles Fertigungssystem (1) zur Bearbeitung von ein oder mehreren Bauteilen (12). Das Fertigungssystem (1) besitzt mindestens einen Roboter (5) mit einer Steuerung (10) und ein oder mehrere Peripherieeinheiten (6,7,8,9) zur Durchführung von ein oder mehreren Bearbeitungs- und/oder Handhabungsprozessen. Diese Prozesse und das Fertigungssystem (1) werden über eine eigenständige zentrale Fertigungsteuerung (3) gesteuert, an welcher die Peripherieeinheiten (6,7,8,9) und die Robotersteuerung (10) angeschlossen sind. Hierbei werden zumindest Teile der Robotersteuerung (10) und der Steuerungen der Peripherieeinheiten (6,7,8,9) in die zentrale Fertigungsteuerung (3) hardwaremäßig und/oder softwaremäßig integriert.

## Beschreibung

Die Erfindung betrifft ein flexibles Fertigungssystem und ein Steuerungsverfahren zur Bearbeitung von ein oder mehreren Bauteilen mit den Merkmalen im Oberbegriff des Hauptanspruches.

Ein solches flexibles Fertigungssystem nebst Steuerungsverfahren ist aus der Praxis bekannt. Es ist als Anlage oder Zelle konzipiert und besitzt mindestens eine Bewegungseinheit, vorzugsweise einen mehrachsigen Industrieroboter, der eine eigene Steuerung besitzt. Außerdem hat das Fertigungssystem ein oder mehrere Peripherieeinheiten zur Durchführung von ein oder mehreren Bearbeitungs- und/oder Handhabungsprozessen. Diese Peripherieeinheiten können prozeßtechnische Einrichtungen, Sensorsysteme zur Anlagenzustandserkennung, Sensorsysteme zur Lageerkennung, Spannvorrichtungen und Systempaletten sein. Außerdem können als Peripherieeinheit Positioniersysteme zur Bauteilpositionierung, Transport- und Speichereinrichtungen für Roh- und Fertigteile, Einrichtungen zur Qualitätssicherung und zur Betriebsdatenerfassung sowie sicherheitstechnische Einrichtungen und dergleichen andere Teile Verwendung finden. Statt dem bevorzugten frei programmierbaren Industrierobotern können auch einfache Linear- oder Dreheinheiten eingesetzt werden. Die Bewegungseinheiten und die Peripherieeinheiten haben häufig eigene Steuerungen. Zusätzlich ist eine Ablaufsteuerung, z.B. eine SPS-Steuerung vorhanden. Bisher werden die Komponenten der flexiblen Fertigungseinrichtungen aufgaben- und kundenspezifisch projektiert und zusammengestellt, wobei den steuerungstechnischen Ablauf die genannten verschiedenen Steuerungen übernehmen. Diese einzelnen Steuerungen sind unterschiedlich zu programmieren und weisen mehr oder weniger Visualisierungsmöglichkeiten auf. Dabei sind stets die Schnittstellen und der zugehörige Datenaustausch zwischen den einzelnen Einrichtungen festzulegen und zu programmieren. In der Praxis wird auch versucht, bei leistungsfähigen Robotersteuerungen einen Teil der vorgenannten Funkionalitäten in die Robotersteuerung zu integrieren bzw. über sogenannte Soft-PLC-Funktionen diese Funktionalitäten von der Robotersteuerung abarbeiten zu lassen. In Fertigungseinrichtungen ohne Roboter, das heißt bei Einrichtungen mit drei oder weniger frei programmierbaren Achsen, übernimmt allerdings nicht die Einachspositioniersteuerung zwangsläufig einen Teil des Steuerungsablaufes der Anlage. Aus den genannten Gründen ist bisher die Projektion und Zusammenstellung flexibler Fertigungseinrichtungen mit einem hohen Aufwand verbunden, der einzelfallbezogen ist und bei jeder neuen Fertigungseinrichtung wiederholt werden muß. Dies schlägt sich in den Kosten nieder.

Es ist daher Aufgabe der vorliegenden Erfindung, ein besseres und kostengünstigeres flexibles Fertigungssystem und ein Steuerungsverfahren aufzuzeigen.

Die Erfindung löst diese Aufgabe mit den Merkmalen im Hauptanspruch.
Das erfindungsgemäße flexible Fertigungssystem nebst Steuerungsverfahren haben den Vorteil, daß der Gesamtaufwand, insbesondere der Projektierungs-, Inbetriebnahme- und Optimierungsaufwand, wesentlich verringert wird. Außerdem erlaubt die eigenständige zentrale Fertigungssteuerung eine Standardisierung und den Aufbau einer Art Baukastensystem.

Die zentrale Fertigungssteuerung ist für vorzugsweise alle Auslegungen des flexiblen Fertigungssystemes die gleiche. Damit bildet die Fertigungssteuerung eine einheitliche Basis für die unterschiedlichsten Konzepte des Fertigungssystems. Es muß daher nur noch einmal eine Anpassung der verschiedenen Bewegungs- und Peripherieinheiten an die zentrale Fertigungssteuerung erfolgen. Hierbei ist es insbesondere von Vorteil, wenn zumindest Teile dieser Steuerungen der Bewegungs- und Peripherieeinheiten als Hardware und/oder Software in die zentrale Fertigungssteuerung integriert sind. Neben der Vereinfachung des Projektierungsaufwandes hat dies auch Vorteile für einen verringerten Steuerungsaufwand und eine erhöhte Geschwindigkeit der Steuerung.

Die Erfindung hat gegenüber dem Stand der Technik den Vorteil, daß sie eine flexible und einfache Konfiguration von Anlagen, Stationen oder Zellen mit und ohne Roboter ermöglicht. Dabei ergeben sich Verbesserungen und Verkürzungen sowie Erleichterungen der Projektierungs-, Konstruktion- und Inbetriebnahmearbeiten. Weitere Vorteile sind die Flexibilität in der Roboterauswahl sowie die einfache und schnelle Programmierung der Robotersteuerung und der Ablaufsteuerung. In der Planungs- und Projektierungsphase sind taktzeitbestimmende Größen frühzeitig bekannt und auch nur in einem geringen Umfang optimierungsbedürftig. Ferner ergibt sich ein umfangreicher Zugriff auf Erfahrungen aus der Vergangenheit durch Standardwertebildung in integrierten Datenbanken.

Günstig ist es ferner, daß kundenspezifische Schnittstellenforderungen mittels Software bearbeitet werden können. Für den Anlagenhersteller und den Kunden bieten sich Vorteile hinsichtlich Flexibilität und Sicherheit in der Planung und der schnellen Layout-Erstellung des flexiblen Fertigungssystems. Vorteile bestehen auch durch verlängerte Integrationszeitenveränderungen, Verwendung bewehrter Standardbaugruppen und klar gegliederte Prozeßabläufe. Das flexible Fertigungssystem läßt sich einfach erweitern durch vorbesetzte Modulbauweise mit Hard- und/oder Software.

Insgesamt ergibt sich eine hohe Verfügbarkeit und Prozeßsicherheit während der Fertigung. Die klare Funktionsteilung innerhalb der Automatisierungskomponenten, die einfache Erweiterungsmöglichkeit vor und in der Fertigung sowie die Verwendung von bewehrten Standardbaugruppen wirken sich ebenfalls günstig aus. Die Erfindung erlaubt eine Reduzierung des Planungs- und Konstruktionsaufwandes sowie der Montage und Inbetriebnahmeaufwands. Verringert wird auch der Ersatzteilbedarf sowie der Schulungsaufwand. Dies geht einher mit einem reduzierten Personalaufwand und geringeren Fehlermöglichkeiten.

Vorteilhafte Ausgestaltungen der Erfindung sind in den Unteransprüchen angegeben.

Die Erfindung ist in den Zeichnungen beispielsweise und schematisch dargestellt. Im einzelnen zeigen:
- Figur 1:: einen Schemaplan eines flexiblen Fertigungssystems mit einer eigenständigen zentralen Fertigungssteuerung und
- Figur 2:: verschiedene Anschlußmöglichkeiten an der zentralen Fertigungssteuerung.

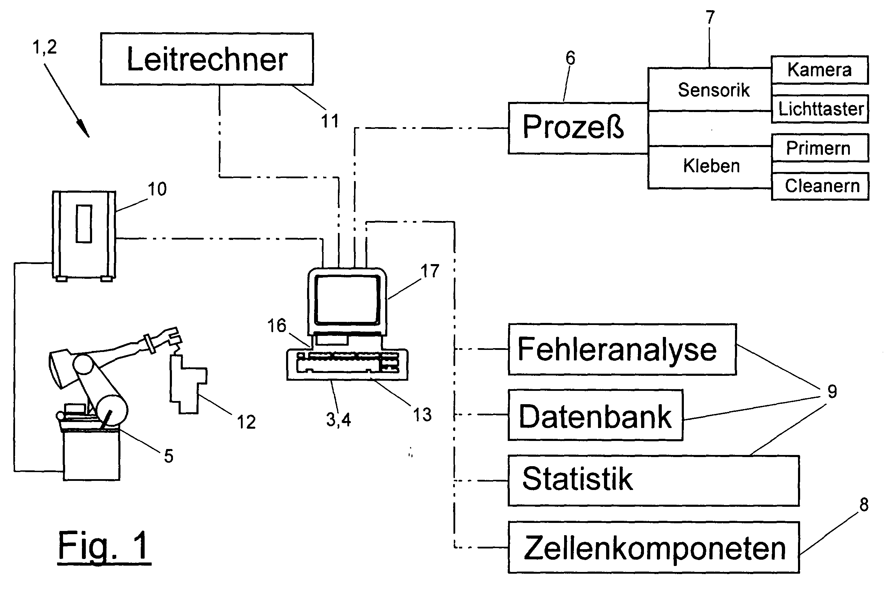

Figur 1 zeigt in einem Schemaplan ein flexibles Fertigungssystem (1), das z.B. als Anlage oder Zelle (2) ausgebildet ist. Mehrere solcher flexibler Fertigungssysteme (1) können miteinander eine übergreifende Herstellungsanlage bilden, die über einen Leitrechner (11) verfügt.

Das flexible Fertigungssystem (1) dient zur Bearbeitung von ein oder mehreren Bauteilen (12), die der Übersicht wegen nur schematisch angedeutet sind. Hierbei kann es sich um beliebige Bauteile handeln, z.B. Einzelteile und mehrteilige Komponenten von Fahrzeugkarosserien. Die Bearbeitungsvorgänge können beliebiger Natur sein, z.B. Schweißen, spanabhebende Bearbeitung, Kleben oder dergleichen. Im flexiblen Fertigungssystem (1) können auch Handhabungsprozesse stattfinden, z.B. Montagearbeiten, Fügeprozesse etc. Das flexible Fertigungssystem (1) beeinhaltet ferner mehrere nachfolgend näher beschriebene Peripherieeinheiten (5,6,7,8,9).

Das flexible Fertigungssystem (1) hat eine zentrale Fertigungssteuerung (3), die mit den Peripherieeinheiten (5,6,7,8,9) verbunden ist. Die zentrale Fertigungssteuerung (3) steuert die Peripherieeinheiten (5,6,7,8,9) und die Prozesse in der Anlage oder Zelle (2).

Sie kann mit dem übergeordneten Leitrechner (11) verbunden sein. Die zentrale Fertigungssteuerung (3) beeinhaltet nicht nur eine Ablaufsteuerung für die einzelnen Prozesse oder Prozeßschritte, sondern steuert darüberhinaus direkt die Peripherieeinheiten (5,6,7,8,9) und die Prozesse.

Die zentrale Fertigungssteuerung (3) ist vorzugsweise als Personalcomputer (4) ausgebildet. Dieser hat ein oder mehrere Prozessoren, ein oder mehrere Datenspeicher (16), z.B. interne und/oder externe Laufwerke, Speicherbausteine etc., eine Datenanzeige (17), z.B. einen Bildschirm sowie mehrere Schnittstellen (13) zur Ein- und Ausgabe von Daten.

Der Personalcomputer (4) hat einen oder mehrere mit hoher Frequenz getaktete Prozessoren mit großem Datendurchsatz und besitzt Echtzeitfähigkeit. Er kann die von ihm übernommenen Steuer- und Regelaufgaben und die Abarbeitung der hierfür erforderlichen Daten und Programme in Echtzeit durchführen.

Die Schnittstellen (13) können mehrfach vorhanden und unterschiedlich ausgebildet sein. Sie bestehen z.B. aus einer Tastatur zur Eingabe von Daten. Außerdem sind Schnittstellen (13) für die Datenfernübertragung vorhanden. Hierfür hat beispielsweise der Personalcomputer (4) in seinem Gehäuse mehrere Aufnahmen oder Steckplätze (14) für elektronische Baugruppen oder Steckkarten (15). Diese Baugruppen oder Steckkarten (15) können mit den Peripherieeinheiten (5,6,7,8,9) verbunden sein.

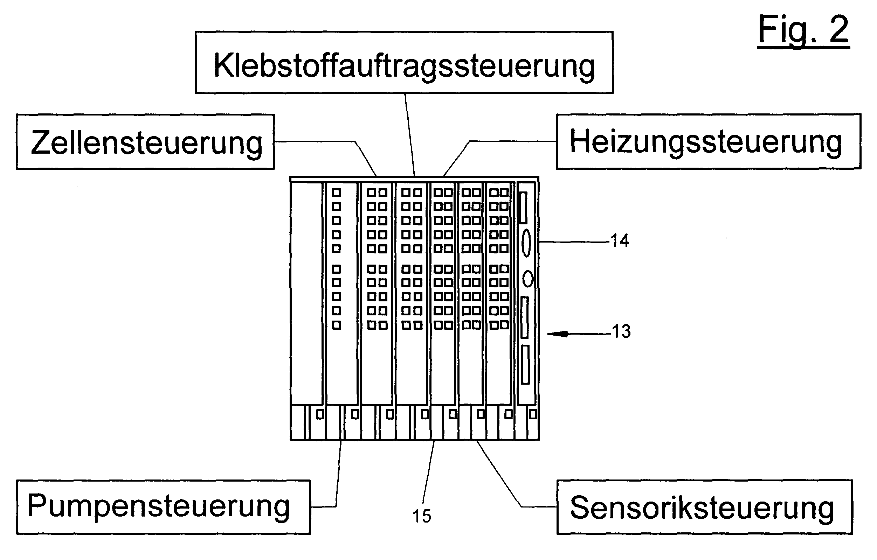

Die Baugruppen oder Steckkarten (15) enthalten bereits eine hardwaremäßige Anpassung für den reibungslosen und schnellen Datenaustausch zwischen den Peripherieeinheiten (5 bis 10) und den Personalcomputer (4). Figur 2 zeigt hierfür ein Beispiel anhand von Steckkarten (15) für ein Klebesystem mit Klebstoffauftragssteuerung, Heizungssteuerung, Pumpen- und Sensoriksteuerung sowie Zellensteuerung.

Zusätzlich oder alternativ kann ein Datenaustausch auch auf andere Weise erfolgen, z.B. über genormte Schnittstellen, insbesondere die bei Personalcomputern (4) üblichen seriellen oder parallelen Ports. Hierüber können z.B. auch weitere Ausgabeeinheiten, z.B. Drucker oder dergleichen angeschlossen werden.

Die Schnittstellen (13) können ferner als Modems, ISDN-Steckkarten oder als andere geeignete Datenübertragungseinheiten ausgebildet sein. Dabei ist auch eine drahtlose Datenübertragung per Funk, Infrarotlicht oder auf andere Weise möglich. Über ein oder mehrere geeignete Schnittstellen (13) wird auch eine Verbindung zwischen dem Personalcomputer (4) und dem übergeordneten Leitrechner (11) der Herstellungsanlage geschaffen. Über diese Verbindung kann die zentrale Fertigungssteuerung (3) des flexiblen Fertigungssystems (1) in die übergreifende Herstellungsanlage und deren Prozesse eingebunden werden. Insbesondere kann dadurch über den Leitrechner (11) ein Zusammenwirken mehrerer Fertigungssysteme (1) in geeigneter Weise geschaffen werden.

In die zentrale Fertigungssteuerung (3) sind zumindest Teile der Steuerung von ein oder mehreren Peripherieeinheiten (5,6,7,8,9) integriert. Die Intergration kann hardwaremäßig über die Baugruppen oder Steckkarten (15) und/oder softwaremäßig über hinterlegte Programme und Treiber erfolgen, welche im Personalcomputer (4) gespeichert sind oder auf die dieses Gerät über externe Speicher Zugriff hat.

Die zentrale Fertigungssteuerung (3) besitzt ein geeignetes Steuerprogramm für die Steuerung der Bearbeitungs- und/oder Handhabungsprozesse und der hierfür erforderlichen Peripherieeinheiten (5,6,7,8,9) im Fertigungssystem (1). Das Steuerprogramm kann vorbereitete Standard-Tools für diese Steuerungsaufgaben besitzen, so daß ein hardwaremäßiges und softwaremäßiges Baukastensystem für die einzelnen Peripherieeinheiten (5,6,7,8,9) geschaffen wird. Dabei kann die zentrale Fertigungssteuerung (3) auch Steuerungsaufgaben der Robotersteuerung (10) übernehmen.

Die Peripherieeinheiten (5,6,7,8,9) können unterschiedlich ausgebildet sein. Im gezeigten Ausführungsbeispiel von Figur 1 handelt es sich um ein Fertigungssystem (1) zur Vorbereitung von Fahrzeugscheiben für den späteren Einbau in Rohkarosserien. Hierfür sind ein oder mehrere Peripherieeinheiten (5) in Form von ein- oder mehrachsigen Bewegungseinheiten (5) vorgesehen. Diese handhaben ein oder mehrere Werkstücke (12) und/oder ein oder mehrerer Werkzeuge. In der bevorzugten Ausführungsform handelt es sich um Industrieroboter oder andere Manipulatoren mit drei oder mehr Achsen, vorzugsweise sechs oder mehr Achsen. Diese besitzen jeweils eine eigene oder gegebenenfalls auch eine gemeinsame Manipulator- oder Robotersteuerung (10). Letztere kann in der vorerwähnten Weise zumindest teilweise in die zentrale Fertigungssteuerung (3) integriert sein. Alternativ können die Bewegungseinheiten (5) auch einfacher ausgebildet sein, z.B. als ein- oder zweiachsige Fahr- und/oder Dreheinheiten.

Als Bewegungseinheit (5) können auch ein oder mehrere andere Fördermittel (nicht dargestellt) vorhanden sein, die Roh- und Fertigteile in das Fertigungssystem hinein- und wieder heraustransportieren. Zu den Peripherieeinheiten (5) oder Zellenkomponenten (8) können auch Speichereinrichtungen für solche Roh- und Fertigteile gehören. Desgleichen sind Peripherieeinheiten (5,8) in Form von Spannvorrichtungen und/oder Systempaletten, Positioniersystemen zur Bauteilpositionierung und dergleichen andere Handhabungsseinheiten vorhanden.

Im flexiblen Fertigungssystem werden ein oder mehrere Bearbeitungsprozesse durchgeführt, für die ein oder mehrere geeignete Peripherieeinheiten (6) vorhanden sind. Dies können prozeßtechnische Einrichtungen, wie Werkzeuge, Spanner etc. sein. Im gezeigten Ausführungsbeispiel von Figur 1 handelt es sich um mehrere Werkzeuge zum Reinigen bzw. Cleanen, zum nachfolgenden Vorbereiten oder Primern der Fahrzeugscheibe und zum anschließenden Auftrag eines geeigneten Klebstoffes.

In Abwandlung dieses Ausführungsbeispiels kann es sich auch bei den prozeßtechnischen Peripherieeinheiten (6) um Schweißeinrichtungen, Montageeinrichtungen, spanabhebende Bearbeitungsvorrichtungen und sonstige beliebige Bearbeitungssysteme handeln.

Die prozeßtechnischen Peripherieeinheiten (6) können kombiniert sein mit ein oder mehreren Peripherieeinheiten (7) für die Sensorik. Dies können z.B. Sensorsysteme zur Anlagenzustandserkennung, Sensorsysteme zur Lageerkennung von Bauteilen und/oder prozeßtechnischen Einrichtungen oder dergleichen andere Überwachungs- und Kontrollsysteme sein. Diese sind mit der zentralen Fertigungssteuerung (3) verbunden, welche die übermittelten Überwachungs- und Kontrolldaten verarbeitet und entsprechend auf die prozeßtechnischen Peripherieeinheiten (6) und andere Peripherieinheiten einwirkt. Im gezeigten Ausführungsbeispiel von Figur 1 handelt es sich z.B. bei der Sensorik (7) um ein oder mehrere Kameras zur optischen Lageerfassung von Bauteilen und dergleichen. Zusätzlich können auch ein oder mehrere Lichttaster, Näherungstaster oder sonstige Sensoren vorhanden sein, mit denen z.B. auch die Güte des Bearbeitungsprozesses bzw. des bearbeiteten Bauteiles kontrolliert werden kann.

An die zentrale Fertigungssteuerung (3) können auch ein oder mehrerer Peripherieeinheiten (9) für die Arbeitsdaten angeschlossen sein. Dies können Auswertesysteme für die Fehleranalyse und/oder Einrichtungen zur Qualitätssicherung sein. Die für den Handhabungs- und/oder Bearbeitungsprozeß erforderlichen Arbeitsdaten können auch von einer Datenbank, insbesondere einer sogenannten Technologie-Datenbank, geliefert werden. Diese stellt nach vorgegebenen Programmen und/oder Kennfeldern, Datenpools etc. die je nach Betriebs- und Prozeßzustand erforderlichen Daten zur Verfügung, die von der zentralen Fertigungssteuerung (3) zur Steuerung des oder der Bearbeitungs- und/oder Handhabungsprozesse benutzt werden. In der zentralen Fertigungssteuerung (3) kann dabei auch eine SPS-Ablaufsteuerung in geeigneter Weise integriert werden, z.B. über sogenannte Soft-PLC's.

Zu den Peripherieeinheiten für die Arbeitsdaten (9) kann auch eine Einrichtung zur Betriebsdatenerfassung und zur Statistik integriert sein. Hier werden die für die Qualitätssicherung notwendigen Daten ermittelt und gespeichert, was für die Qualitätssicherung und einen späteren Qualitätsnachweis von Bedeutung sein kann.

Die Peripherieeinheit (9) für die Arbeitsdaten sind vorzugsweise in Form von Software in die zentrale Fertigungssteuerung (3) bzw. dem Personalcomputer integriert und dort in geeigneter Weise auf internen oder externen Laufwerken (16) gespeichert. Sie können alternativ aber auch extern angeordnet sein, wobei ein Datenaustausch über die vorerwähnten Schnittstellen (13) stattfindet.

Als Peripherieeinheiten (8) können auch weitere Zellen- oder Anlagenkomponenten vorhanden sein. Dies sind z.B. sicherheitstechnische Einrichtungen. Es können aber auch Spann- und Positioniereinrichtungen für Bauteile, Speicherkomponenten oder dergleichen sein.

Die Vorgehenweise bei der Erstellung einer Anlage oder Zelle (2) von der Projektierung bis zur Produktion teilt sich dabei in vier Schritte:
- Projektierung und Konfigurierung der Einrichtung (Zelle, Anlage oder Station (2)) auf dem Personalcomputer (4) mittels hinterlegter Standard-Tools einschließlich der dazugehörigen Schnittstellen (13) zu den Peripherieeinheiten (5,6,7,8,9);
- Erstellung des Ablaufprogramms für das Handhaben und/oder Bearbeiten von ein oder mehreren Bauteilen (12) unter Einbindung der einzelnen Peripherieeinheiten (5,6,7,8,9) der flexiblen Fertigungseinrichtung (1) und der Arbeitsinhalte für die verschiedenen Bewegungseinrichtungen (5);
- Kontrollieren, Korrigieren sowie Optimieren der Arbeitsabläufe und der Prozesse und
- Abarbeiten der programmierten Aufgaben gemäß den Bauteilprogrammen (Produktion).

Die Projektierung und Konfiguration sowie die dazugehörige Programmerstellung (Zellen- oder Stationsprogramm, Bewegungs- und Technologie-Programm) erfolgt offline am Personalcomputer (4) ohne programmiersprachenspezifische Kenntnisse mit einer geeigneten Bedienerführung im Klartext.

Das Projektieren und Konfigurieren der Zelle, Anlage oder Station (2) erfolgt in einem Deklarationsteil mit entsprechenden Standard-Tolls einschließlich der Schnittstellenfestlegung mit Programmunterstützung am Personalcomputer (4) durch:
- Auswahl der Bewegungseinrichtung (5) (Industrieroboter ein- oder mehrachsige Bewegungsmodul) (e)) aus einem Katalog verschiedener Hersteller und Typen;
- Auswahl der Systemdaten zur Bewegungsführung (Maschinendaten);
- Auswahl des Prozesses, wie Handhabung, Punktschweißen, Rollnahtschweißen, Schutzgasschweißen (MIG/MAG, WIG, Plasma), Laserstrahlschweißen, Kleben, Dichten, Dämmen usw.;
- Auswahl der prozeßtechnischen Peripherieeinrichtungen (6) aus einem Katalog verschiedener Hersteller und Typen mit Festlegung der Werkzeuggeometrie (Werkzeugdaten);
- Auswahl und Zuordnung der Technologiesignale für die prozeßtechnischen Peripherieeinheiten (6) über die Arbeitsdaten, Peripherie (9) (Schnittstellenfestlegung);
- Auswahl des oder der Peripherieeinheiten (7) für die Sensorik zur Positions- und/oder Arbeitsstellenerkennung (z.B. Spalterkennung) und/oder zur Anlagenzustandserkennung aus Sensorsystemkatalogen;
- Konfiguration der Zellenkomponenten (8), z.B. Spannvorrichtungen und Systempaletten, wie auch Auswahl der Positioniersysteme zur Arbeitsteilpositionierung aus einem Positionierkatalog, Auswahl der Transporteinrichtungen für Roh- und Fertigteile aus Systemkatalog, Auswahl der Speichereinrichtungen für Roh- und Fertigteile aus Systemkatalog, Auswahl der Einrichtungen zur Qualitätssicherung für die Qualitätsüberwachung und die Dokumentation aus prozeßspezifischen Systemkatalogen, Auswahl der sicherheitstechnischen Einrichtungen;
- Festlegung der Systemdaten zur Koordinierungssteuerung innerhalb der Zelle, Anlage oder Station (2).

Das Programieren und Generieren der Arbeitsinhalte für die Zelle, Anlage oder Station (2) erfolgt gleichermaßen am Personalcomputer (4) mittels eines Programmgenarators und einer entsprechenden Bedienoberfläche, wobei die vorgenannte Projektierung und Konfiguration mit den ausgewählten Peripherieeinheiten und zugehörigen Schnittstellen die Basis für das Gesamtprogramm ist und sich in folgende Schritte teilt:
- Bauteiltransport in die Anlage, Station oder Zelle (2) mit Bauteilabfrage und Einlegen des Bauteils (12) in die Spannstation mit Bauteil- und Spannerabfrage;
- Bearbeitung des Bauteils (12) mit Programmieren der Bewegungseinrichtung (5) und des Positionierers für die Abschnitte mit und ohne Wertschöpfung am Bauteil;
- Generierung des Rumpfprogrammes ohne Geometriedaten für die einzelnen Abschnitte, Versatzbewegung ohne Wertschöpfung sowie Bewegungsabschnitte mit Wertschöpfung entweder durch,
   - Geometriedatenübermittlung onlinde durch indirekte Programmierung mit CAD-Kopplung aus Bauteildaten (Datenbank (9) Bauteilgeometrie) oder
   - direkte Programmierung offline später an der Anlage selbst, wobei die Raumpunkte ohne Geometriedatenzuweisung schon festgelegt sind (z.B. durch Teach in);

Einfügen der Bahn- zugehörigen Technologiedaten beispielsweise
- online durch Übernahme der Technologiedaten aus einer Wissens-Datenbank (9) (Technologiedatenbank) oder
- offline durch direkte Programmierung und Parameterzuweisung;
- Automatische Generierung der zellenspezifischen Störüberwachung und Scherheitstechnik;
- Generierung der prozeßspezifischen Parameterüberwachung und
- automatische Generierung der Betriebsdatenerfassung (BDE und Statistik (9) für Dokumentation und Störungsanalyse).

Nach diesem zweiten Schritt liegt ein ablauffähiges Zellenprogramm vor, bei dem die Anzahl und Zuordnung der Raumpunkte oder mit Geometriedaten sowie die Technologierwerte (z.B. Schweißgeschwindigkeit, Zünd- und Endkraterfüllparameter, Schweißparameter, Pendelparameter usw.) vorbesetzt sind.

Das Kontrollieren, Korrigieren sowie Optimieren der Arbeitsabläufe und Prozesse erfolgt im Dritten Schritt direkt an der Einrichtung wiederum am Personalcomputer (4):
- Kontrolle und Korrektur des vorerwähnten erstellten Programmablaufes (Bauteile beladen, transportieren, spannen, positionieren, bearbeiten, entladen inkl. Fehlerdiagnose, Betriebsdatenerfassung Qualitätssicherung) für die unter dem ersten Schritt aufgeführten Komponenten der flexiblen Fertigungseinrichtung (1);
- Ermittlung von prozeß- und bauteilspezifischen Größen, welche im Produktionsablauf gleich sind, z.B. Vorgaben für die geschwindigkeitsabhängige Parameteränderung, Vorgaben für orientierungsabhängige Zangenausgleichsansteuerung, Vorgaben für bauteilspezifische Sensordaten, Vorgaben für bauteilspezifische Qualitätsüberwachung etc.;
- Optimierung der Arbeitsabläufe und Prozesse, insbesondere Bewegungsablauf (Taktzeit), Feinkorrektur der Geometriedaten (z.B. Nahtlage, Punktlage, Kleberaupe usw.) und der Technologiedaten sowie des Prozeßablaufs (Qualität), der Parameter für Sensorik, Tool-Center-Point-Kontrolle und Kontrollzyklen, Reinigungszyklen und -zeiten, Aufnahme Masterteil für Qualitätssicherungssystem, Aufnahme der Ablaufzeiten (Ablaufzyklus für Zeiten mit und ohne Wertschöpfung-Taktzeit) als Basis für die Störungsüberwachung und die Betriebsdatenerfassung etc.

Nach diesem dritten Schritt liegt ein ablauffähiges Zellenprogram vor, das für die Produktion an mehreren Bauteilen (12) getestet und einsatzfähig ist.

In der anschließenden Produktionsphase findet eine Ablaufkontrolle unter Produktionsbedingungen statt. Hierbei kann eine Optimierung nach Bedarf vorgenommen werden. Eine Dokumentation des Ablaufprogramms in der PC-Steuerung mit festgelegten Standard-Tools und Schnittstellenprogrammen ist die Basis der Gesamtdokumentation. Ferner findet eine Rückmeldung der Parametereinstellungen für die Wissens-Datenbank (9) (Aktualisierung gegebenenfalls Übernahme für spätere ähnliche Aufgaben) statt.

Abwandlungen des gezeigten Ausführungsbeispiels sind in vielerlei Formen möglich. Die Zahl, Kombination, Ausbildung und Anordnung der Peripherieeinheiten (5,6,7,8,9) kann beliebig variieren. Auch die zentrale Fertigungssteuerung (3) kann anders ausgebildet sein. Sie kann zudem mehrere Anlagen oder Zellen (2) steuern. Der Leitrechner (11) und dessen Verbindung zur zentralen Fertigungssteuerung (3) können auch entfallen.

### BEZUGSZEICHENLISTE

- 1: Flexibles Fertigungssystem
- 2: Anlage, Zelle, Station
- 3: zentrale Fertigungsteuerung
- 4: Personalcomputer
- 5: Peripherie, Bewegungseinheit, Roboter
- 6: Peripherie, Prozeß
- 7: Peripherie, Sensorik
- 8: Peripherie, Zellenkomponenten
- 9: Peripherie, Arbeitsdaten
- 10: Robotersteuerung
- 11: Leitrechner
- 12: Bauteil
- 13: Schnittstelle
- 14: Aufnahme, Steckplatz
- 15: Baugruppe, Steckkarte
- 16: Datenspeicher, Laufwerk
- 17: Datenanzeige, Bildschirm

## Patentansprüche

1. Verfahren zur Steuerung der Bearbeitung von ein oder mehreren Bauteilen (12) mit einem flexibles Fertigungssystem (1), wobei das Fertigungssystem (1) mindestens eine Bewegungseinheit (5) mit einer Steuerung (10) und ein oder mehreren Peripherieeinheiten (6,7,8,9) zur Durchführung von ein oder mehreren Bearbeitungs- und/oder Handhabungsprozessen aufweist, dadurch **gekennzeichnet,** daß die Prozesse und das Fertigungssystem (1) über eine eigenständige zentrale Fertigungssteuerung (3) gesteuert werden, an der die Steuerung (10) der Bewegungseinheit(en) (5) und die Peripherieeinheiten (6,7,8,9) angeschlossen sind.

2. Verfahren nach Anspruch 1, dadurch **gekennzeichnet,** daß zumindest Teile der Steuerung(en) der Bewegungseinheit(en) (5) und der Peripherieeinheit(en) (6,7,8,9) in die zentrale Fertigungssteuerung (3) hardwaremäßig und/oder softwaremäßig integriert werden.

3. Flexibles Fertigungssystem zur Bearbeitung von ein oder mehreren Bauteilen (12), wobei das Fertigungssystem (1) mindestens eine Bewegungseinheit (5) mit einer Steuerung (10) und ein oder mehreren Peripherieeinheiten (6,7,8,9) zur Durchführung von ein oder mehreren Bearbeitungs- und/oder Handhabungsprozessen aufweist, dadurch **gekennzeichnet,** daß das Fertigungssystem (1) eine eigenständige zentrale Fertigungssteuerung (3) aufweist, an der die Steuerung (10) der Bewegungseinheit(en) (5) und die Peripherieeinheiten (6,7,8,9) angeschlossen sind.

4. Flexibles Fertigungssystem nach Anspruch 3, dadurch **gekennzeichnet,** daß das Fertigungssystem (1) als Anlage oder Zelle (2) ausgebildet ist.

5. Flexibles Fertigungssystem nach Anspruch 3 oder 4, dadurch **gekennzeichnet,** daß die zentrale Fertigungssteuerung (3) einen Personalcomputer (4) mit ein oder mehreren Prozessoren, ein oder mehreren Datenspeichern (16), einer Datenanzeige (17) sowie mehreren Schnittstellen (13) zur Ein- und Ausgabe von Daten aufweist.

6. Flexibles Fertigungssystem nach Anspruch 5, dadurch **gekennzeichnet,** daß der Personalcomputer (4) Echtzeitfähigkeit besitzt.

7. Flexibles Fertigungssystem nach einem der Ansprüche 3 bis 6, dadurch **gekennzeichnet,** daß zumindest Teile der Steuerung(en) der Peripherieeinheit(en) (6,7,8,9) in die zentrale Fertigungssteuerung (3) integriert sind.

8. Flexibles Fertigungssystem nach einem der Ansprüche 3 bis 7, dadurch **gekennzeichnet,** daß die zentrale Fertigungssteuerung (3) mehrere Aufnahmen (14) für Hardwareteile, insbesondere elektronische Steckkarten (15), der Peripheriesteuerung(en) aufweist.

9. Flexibles Fertigungssystem nach einem der Ansprüche 3 bis 8, dadurch **gekennzeichnet,** daß die zentrale Fertigungssteuerung (3) ein oder mehrere Datenspeicher für Software der Peripheriesteuerung(en) aufweist.

10. Flexibles Fertigungssystem nach einem der Ansprüche 3 bis 9, dadurch **gekennzeichnet,** daß die zentrale Fertigungssteuerung (3) ein Steuerprogramm mit vorbereiteten Standard-Tools für die Peripherieeinheiten (5,6,7,8,9) aufweist.

11. Flexibles Fertigungssystem nach einem der Ansprüche 3 bis 10, dadurch **gekennzeichnet,** daß die zentrale Fertigungssteuerung (3) mit einem anlagenübergreifenden Leitrechner (11) verbunden ist.

12. Flexibles Fertigungssystem nach einem der Ansprüche 3 bis 11, dadurch **gekennzeichnet,** daß die Steuerung (10) der Bewegungseinheit(en) (5) in die zentrale Fertigungssteuerung (3) integriert ist.
